# EUROPEAN PATENT SPECIFICATION

(11) **EP 2 609 146 B1**
(45) Date of publication and mention of the grant of the patent: **15.04.2015**
(21) Application number: 10765657.1
(22) Date of filing: 26.08.2010
(51) Int. Cl.: C08J 11/20

(54) **PROCESS FOR TERMICAL DEGRADATION OF PVC AND OTHER WASTES CONTAINING HALOGEN-CONTAINING POLYMER WASTE**
VERFAHREN FÜR DEN THERMISCHEN ABBAU VON PCV ODER ANDEREM ABFALL MT HALOGENHALTIGEM POLYMERRESTSTOFFEN
PROCÉDÉ DE DÉGRADATION THERMIQUE DU PVC ET AUTRES DÉCHETS CONTENANT DES DÉCHETS POLYMÈRES À TENEUR EN HALOGÈNE

(43) Date of publication of application: 03.07.2013
(73) Proprietor: AHD Vagyonkezelö és Tanácsadó Kft., 9200 Mosonmagyaróvár (HU)
(72) Inventor: CSÓKAI, Viktor, H-2310 Szigetszentmiklós (HU); SZINAY, Zoltán, H-2330 Dunaharaszti (HU); BODAY, Ádám, H-2141 Csömör (HU)
(74) Representative: Derzsi, Katalin
(86) International application number: PCT/HU2010/000092
(87) International publication number: WO 2012/025771

(56) References cited:
- EP-A1- 2 135 923
- WO-A1-2007/091108
- US-A- 5 569 801

## Description

The subject matter of the patent is a process technology concerning thermal degradation of plastic wastes containing PVC and other plastic waste with halogen content.

For the purposes of this description the term 'plastic waste with halogen content' shall be understood as plastic waste including but not limited to polyethylene, polypropylene, polystyrene and acrylonitrile-butadiene-styrene polymers/plastics (ABS) contaminated with PVC or other plastics with halogen content. Besides the plastic with the halogen content, the mixture of one or more kinds of plastic waste can also be present in the plastic waste subject to processing.

It is well known that as a result of a decade's long process, natural materials have been replaced partly or wholly in almost all areas of life by polymers. The diverse fields where plastics are used entail the extension of areas of application as well as with the increase of the amount of polymers used. Natural degradation of plastic wastes is an extremely slow process while the plastic would pollute the environment in the process. Industrial incineration of this type of waste is extremely harmful for the environment and storage of the wastes to be eliminated or destructed is not feasible as it represents a huge extra problem and costs due to the ever increasing volumes generated.

For the reasons listed above the issue of environmentally friendly management and disposal of discarded polymer wastes has become a more and more serious concern worldwide.

As the problem is genuine and urgent, a number of papers have been published dealing with the possibilities of solution, most of them in reference to the de-polymerisation implemented using the principle of plastic pyrolysis, supplemented usually with alkaline neutralisation.

For instance, in accordance with the description of the patent No. EP 0125383 halogen containing organic waste is treated with alkali-earth metal - base and alkali-earth metal - halogenide salt melt in oxidative atmosphere. The process is conducted in a chamber and no special purpose-built equipment suitable for the application of the process is described. A disadvantage of the process is the high temperature within the treatment chamber and the unjustified high volume of alkali-earth metal demand.

The description of the European patent No. EP 0111081 reports a procedure and equipment for the purposes of waste material pyrolysis. The solution involves a drum-type kiln (barrel-shaped furnace) where the substance to be treated is annealed at a temperature of 400 to 600°C, then hydrated lime is added. The gases generated this way however still have a substantial amount of acid content and the patent does not provide any recommendation in terms of procedure or equipment for the purposes of removing those gases. Therefore, the solution is not satisfactory.

Furthermore, there are known solutions by Japanese developers which involve the heating of the waste materials under pressure in the presence of metal salts, mainly in alkaline solutions. The majority of these procedures comply with the requirements of partial de-halogenisation. However, no purpose built equipment designed for the disposal of PVC or any other high halogen containing plastic materials using this method has not become known.

Pursuant to the description of patent No DE 22 60 392 de-hydrohalogenisation is carried out at a temperature of 200 to-300°C, but the quality of the products obtained limits the opportunities of further use. Additional disadvantages include the necessity to evaporate the water formed, which can only be accomplished with the deployment of large energy volumes if you are to achieve appropriate efficiency, thus it can be stated that at the end of the day the procedure is too expensive and unprofitable.

It can be stated with regard to all the solutions referred to above that hydrochloric acid at a temperature of 300°C is generated in the equipment used and the temperature of the muriatic gas leaving the equipment would deteriorate the wall of the reaction vessel, causing damages to the pipelines as well. You should not disregard the potential of generating cancerogenic substances like dioxins at this temperature.

Furthermore, a part of the state-of-the-art solutions discussed above can only be implemented to a limited extent on an industrial scale, others are unprofitable, and the installations used are clumsy and can not make their way up practical implementation.

According to the solution pursuant to the international announcement made under the registration number WO 2007/091108 degradation of PVC and other high halogen content plastic substances can be effectuated with the use of a purpose built equipment from which a part of the decomposition products such as the hydrochloric acid generated can be converted into muriatic acid to be used in other chemical reactions, namely in the decomposition of polyurethane (PUR). It can be either extracted and/or led into a reaction in an expedient manner where it can be utilised (PUR decomposition reactor). Oil phase separated in the degradation process can be utilised separately.

This solution represented a significant progress compared to those available earlier on but the technology is associated with a special area of application and an individual procedure and equipment, which uses hydrochloric acid in the polymer degradation process.

The international description of patent No WO 2006/092306 presented a procedure and an equipment to de-polymerise raw materials containing hydrocarbons. In the course of the procedure raw materials are preheated to render them in a pulpy or liquid state and are continuously injected into a reactor chamber under pressure. The reactor has been previously heated up to the degradation temperature. The gas fraction is gradually retrieved from the reactor and the bottom product is obtained without interruption or in certain intervals. The solution may be considered not only for plastics but some other hydrocarbon containing substances such as paper or textiles and the developers do not deal with the problem of halogen content. The present state of the technique is mostly referred to as a track record of various procedures operated with the assistance of catalytic converters.

Another procedure is furthermore known from practice which does not stand at a level of industrial scale (NKT Research and Innovation A/S Denmark), which consists basically of a pyrolysis and a subsequent metal extraction phase. During the procedure mainly 100 % PVC based polymers were processed such as electric cables and flooring materials. The high PVC containing waste material is free from other waste substances such as polypropylene. The products of the process technology are calcium-chloride, coke, organic condensates and heavy metals.

According to another technology known from practice (Paraffinwerk Webau GmbH) destructive distillation of polyolefins is carried out, whereby thermal cracking is combined with fractionated treatment of the product by distillation. The technology is well suited to deal with polyethylene and polypropylene waste from the packaging industry, the products being 50 % paraffin wax (C₁₅-C₃₀) and 40 % oil.

A part of the processes described above is high energy demanding, costly and required the addition of various auxiliary products; others have the disadvantage of covering only a limited range of wastes and several ones do not provide a solution and does not even set the objective to handle the issue of halogen contents.

Therefore the main objective of the present patent is to create a profitable procedure not requiring the addition of any auxiliary products by eliminating the disadvantages arising from the current state-of-the-art technologies, a procedure which does not require any preliminary selection of the substances to be treated, and which results in obtaining a final product targeted for use in energy generation.

During the development of the process technology constituting the subject matter of this patent the kinetics of polymer pyrolysis was the main priority which had to be dealt with. In the case of PVC and halogenated plastic waste it was recognised in the course of the research work that provided the appropriate conditions are maintained the liberation interval of hydrogen halogenides (HCl in the case of PVC) which caused great troubles earlier on can be separated both in terms of time and space from the degradation period of the hydrocarbon chains in the polymer, in other word there was a possibility to remediate the key problem of these kind of technologies by keeping the chemical process in hand. This was one of the discoveries leading to the creation of the invention patent. By the condensation of the inorganic acids generated an industrial scale product is created which is carefully isolated from the generation of the hydrocarbons intended for energy production. A condition precedent of dioxin formation is the simultaneous presence of organic radicals, oxygen and chlorine at a temperature higher than 260°C. As the chlorine content of the substances is extracted from the system in the form of hydrochloric acid before the temperature range providing the opportunity for dioxin formation would have been reached by simultaneously excluding oxygen from the system and before the temperature at which organic radicals are formed, this way the generation of the strongly carcinogenic dioxins can be prevented.

According to the analysis of the experiments conducted so far the thermolysis of the PVC used results in a 5 to 20 % concentration hydrochloric acid solution, hydrocarbon gas compound/mixture sufficient to maintain the self-sustenance of the technology, light fraction hydrocarbon mixture (benzine/petrol), and high energy oil derivates to be used in Diesel aggregates in addition to the residual smoke black (carbon black). As a first step, thus, we tried to solve the problem of the treatment and disposal of halogen acids (primarily hydrochloric acid) egressing from the PVC and other halogenated polymer content of plastic waste mixtures under thermolytic conditions. Provided namely, if the polymer degradation process and de-halogenisation take place in a single step, in other words the elimination (liberation) of HCI gas and unsaturated organic radicals happens simultaneously, they react with each other forming extremely stable structure polyhalogenated, mainly aromatic hydrocarbons and - in the presence of oxygen - dioxins.

Separation of dehalogenisation and depolymerisation in terms of space and time is of paramount importance for several reasons. Elimination (liberation) of hydrochloric acid (HCI) gas from PVC would take place in the temperature range of 210 to 250°C with a great degree of confidence, while polymers are expected not to degrade at this temperature. As the HCI gas is readily soluble in water, with its absorption in the known manner an industrial rated product can be manufactured. On the other hand, the most important reason for doing this to prevent the formation of dioxins in the reaction chamber so that the organic radicals eliminated from the polymers in the course of the degradation process above 260°C could not combine with chlorine left in the reaction space in cyclisation, aromatisation reactions. Therefore, the key elements of the procedure are the relatively low temperature applied and the exclusion of oxygen.

Optimum heat transfer in duty-cycle operation reactors is usually difficult to implement, especially when the substance in the reactor chamber has so poor heat transfer parameters as the mixture to be processed by the process of the patent. Surprisingly, it was found that there is a certain ratio of the plastic and oil mixture where relatively low amounts of oil are sufficient to absorb (i. e. heat transfer and diffusion causing the swelling of plastic) the main mass of the plastic waste, thus rendering it suitable for further processing. It was also recognised that a certain amount of a special fraction of the oil obtained as one of the finished products in the technology can be recycled and put back into the main reactor, in other words the patent provides a method to assist the dehalogenisation reaction by the use of the oil derivate obtained during the process, that is by the introduction of the heavy oil fraction from the main reactor. The heavy oil fraction re-introduced into the process preferably should be as follows: PVC containing plastic ground waste tp heavy oil mass ratio = 1:0.3-0.8, preferably 1:0.4. It was found that with this method ensuring both the required extent of heat transfer improvement, and the homogeneity of the reaction compound can be provided in a simple and cost effective manner.

As the second step of the patent development, the conditions necessary for the implementation of the dehalogenated polymer degradation were determined.

It was demonstrated for pure polyethylene samples that due to the relatively high heat stability of the polymer temperature is an important factor having an influence on both product volumes and quality in the 420-500°C temperature range. As in our case you can not talk about the processing of pure, selected plastic waste, since the very objective of the invention it to process plastic waste mixtures, other effects assisting polymer degradation and hence, reducing the need of activation energy had to be taken into account was well. Such impact is exerted by the intermediary product mixture formed earlier on in the dehalogenisation reactor, which facilitates degradation due to its unsaturated manner and significant amount of active radicals, thus reducing the significance of the step requiring the highest level of energy, i.e. initialisation. In our case thus if the plastic waste to be processed is not homogenous PE, both the degradation kinetics and mechanism would change substantially and the composition of the oil phase hydrocarbons obtained will become more complex.

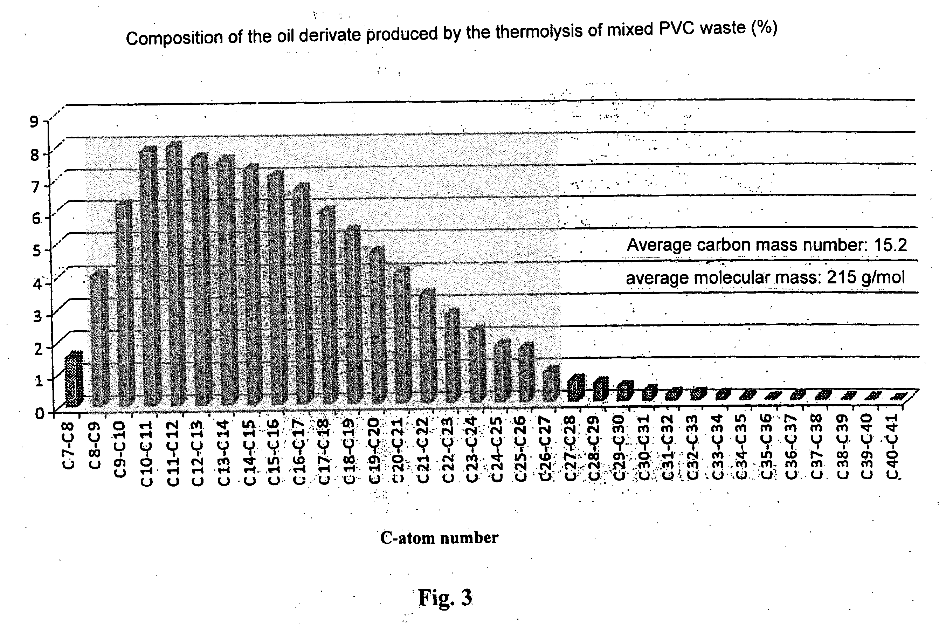

Having completed the dehalogenisation and depolymerisation reactions of the mixed plastic waste material, composition of the oil produced was determined using gas chromatography mass spectroscopy (GC-MS). Results are presented on Figure 3 as the composition of oil derivates produced by thermolytic degradation of mixed PVC waste, while Graph 1 shows an analysis of these derivates in accordance with their respective boiling point ranges. It can be seen on Figure 3 that a relatively high volume of petrol fraction can be obtained with this method, and individual boiling point ranges contain approximately the same amount of products. Separation of this petrol fraction from the much higher energy content Diesel fraction was also part of our goal.

It should be noted here that the processing opportunities of pure polystyrene waste was also investigated. As an ideal technology was looked for for the purposes of processing mixed plastic waste, thermal degradation of acrylonitrile-butadiene-styrene polymers/plastics (ABS), a plastic consisting of aromatic monomers identical with polystyrene (PS) was also studied. During the reaction discussed above ABS provided oil derivate which was isolated with a petrol content of 63 %, with a congealing point below -20°C. The dominant component in it was the C₉-C₁₀ fraction, and in addition to alkyl benzene it also contained aliphatic and oxygen containing cycloaliphatic hydrocarbons (average carbon mass number: 13.2; average molecular mass: 186 g/mol). As the petrol containing gas oil can not be processed homogeneously for energy producing purposes, ABS or PS containing plastic waste may represent a serious problem. The composition of the oil derivate produced in the temperature range around 450°C referred to above is pretty inhomogeneous even if the mixed waste does not contain any styrene containing polymer. This raises the need of an eventual after treatment, which problem also emerges when waste mixtures containing aromatic monomers are to be processed (see the distillation diagram of the oil produced on Graph 1). From the point of view of practical implementation the application of a technology which is not able to process the very broad spectrum of composition found in the mixed plastic waste available, would not be a suitable solution to achieve the objective set by the invention. Therefore, in the inventive procedure to be patented an additional unit is deployed with regard to the ABS and/or waste eventually present in the mixture, which provides a solution to the cooling, separation and isolation of the oil derivatives produced, without the need to invest any additional energy (see the flowchart to be discussed later on).

Thus, the key point in the procedure of the invention is that the plastic waste to be treated is chopped up first, then transferred into a de-halogenisation reactor, heavy oil fraction added and a chips/heavy oil mixture of 1:0.3-0.8 mass ratio is established, the reaction mixture is heated up to a temperature of 210-250°C, an acidic solution is formed from the hydrogen halogen gas eliminated from the substance with the known method, it is removed, while the mixture retained in the reactor chamber is forwarded to the de-polymerisation reactor, where temperature is raised to at least 480°C, but kept below 600°C, the hydrocarbon gas mixture generated is extracted, separated into fractions, condensed, and the ratio of the heavy oil fraction referred to above as necessary for the processing of the waste is returned to the de-halogenisation reactor to form a mixture of plastic chippings and heavy oil.

The preferable ratio of the mixture of plastic chippings and heavy oil mass should be 1:0.4.

According to the preferential effectuation mode of the procedure constituting the invention the vapour and gas mixture discharged from the reactor space is separated in a fractional condensation system consisting of serially connected condensers after the de-polymerisation system based on the boiling point of the respective constituents.

An additional beneficial mode of effectuation of the procedure constituting the invention is when the heat requirement of the de-halogenisation process is covered by the combustion gases originating from the combustion chamber of the de-polymerisation reactor.

Better understanding of the solution provided by the invention can be ensured with the help of the figures where
Graph No 1 illustrates the composition of the oil derived from the procedure constituting the subject matter of the invention to be patented,
Flow chart No 2 presents the procedure constituting the subject matter of the invention to be patented,
Figure No 3 shows the composition of all the oil derivates originating from the destructive process.

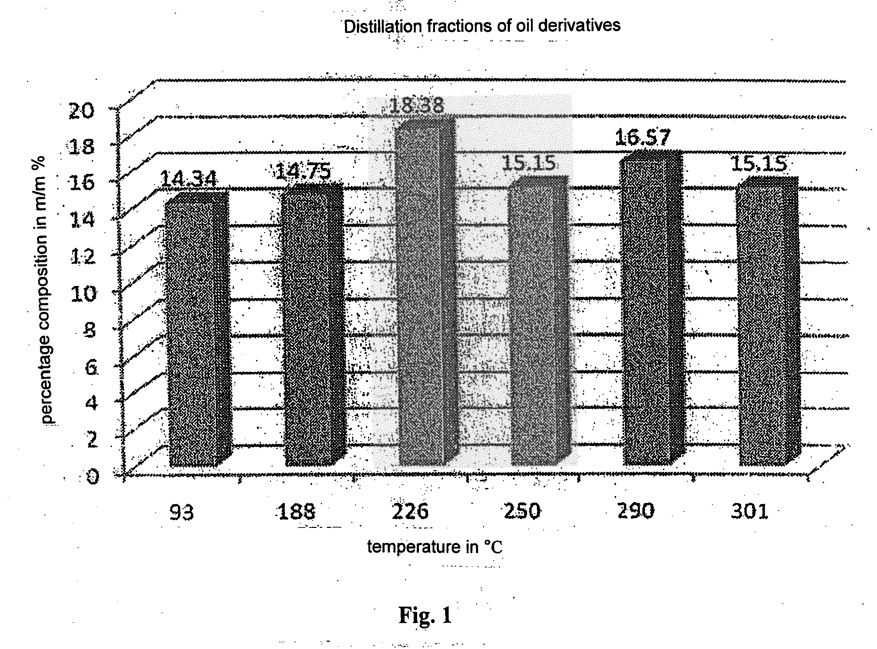

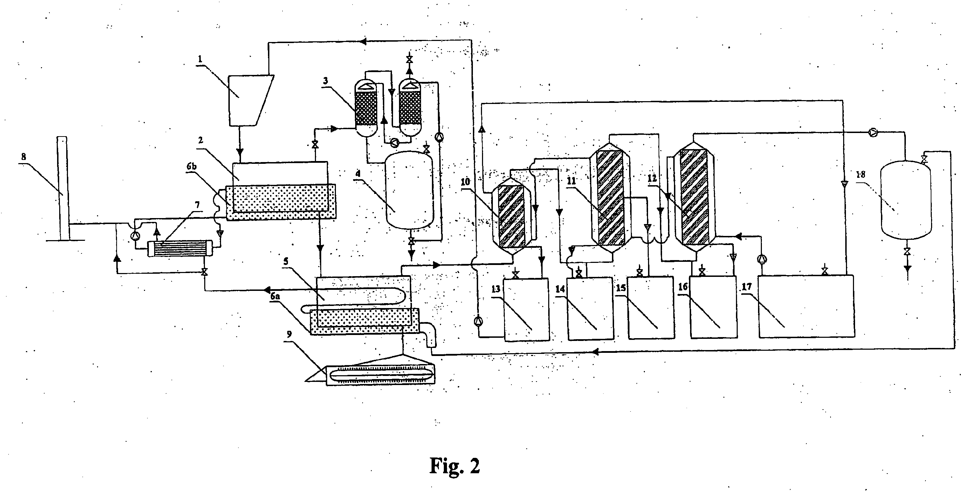

Thus, the procedure of the invention to be patented is set out in details on the flowchart of Figure No 2.

In the course of the procedure ground and chopped plastic waste is transported from the feeder tank No 1 to the PVC reactor No 2, which is basically a tank reactor operated at a 300 mbar overpressure level. Here the waste is united with the heavy oil fraction generated in the main reactor No 5 and stored in the oil tank No 13, which plays the role of stabilising the inner temperature of the PVC reactor No 2 and of optimising heat transfer. Heat requirements of the de-halogenisation process is ensured by transferring the energy content of the heating space No 6a of the main reactor No 5 through a heat exchanger (No 7) to the heat transferring oil heating the cockle (No 6b) of the PVC reactor (No 2), thus heating of both reactors can be effectuated with the use of a single set of burners.

### Description of PVC reactor No 2:

The outer flue gas heating jacket of the PVC reactor No 2 requires tolerating a maximum 500°C temperature level, while the inner pressure resistance is 4 bar. The PVC reactor No 2 has an auger mixer in the inner space with bottom outlet. The tank lid has an acid resistant inner PUR coating and is equipped with a thermometer, pressure gauge, a gas valve opening at a pressure of 1.3 bar and is suited to feed the plastic waste and to receive the heavy oil transported back from the main reactor. The dehalogenated polymer compound is discharged through the bottom outlet into the main reactor No 5. The heating medium flowing in the heating jacket is the heat transferring oil arriving from the heat exchanger No 7. Flue gases are emitted on smokestack No 8. The capacity of the reactor illustrated on the figure is 1 t/h PVC containing plastic waste + 400 litres heavy oil (it is a 2 m³ volume intermittent operation reactor). The HCI gas produced is transferred into water based countercurrent absorber appliances No 3 through the gas outlet, in a pipeline which also has an acid resistant PUR coating. The water based countercurrent absorber appliances No 3 are simple filled columns with Raschig rings Concentration of the hydrochloric acid produced will be determined by density measurement in the hydrochloric acid solution tank No 4, and as soon as it reached the appropriate concentration, it is transferred into a hydrochloric acid solution storage tank. Therefore, this unit has a continuous water use and produces hydrochloric acid solution on a permanent basis, pending on the PVC content in the plastic waste processed.

### Description of the main reactor No 5:

The mixture of dehalogenated polymer and heavy oil is forwarded from the PVC reactor No 2 to the main reactor No 5. It is kept here at a temperature between 450 to 480°C. Depolymerisation takes place at this temperature, meaning that long polymer chains are broken down into smaller units, forming alkane hydrocarbons, olefin copolymers and aromatic systems up to a carbon chain length of C₁₄ as seen on Figure No 3. The favoured temperature range can be maintained so that during the degradation process the wall temperature of the main reactor vessel remained permanently above 480°C, but should not reach 600°C under any circumstances. This way the energy requirement of both the thermal degradation and the distillation of the liquid phase fractions which may have quite high boiling points. The main reactor No 5 is equipped with a special mixing system arranged horizontally. The secondary mixer is a continuous operation auger mixer built into a trough that has an oppositional rotation direction to the primary mixer, which has a much larger surface and is also an auger mixer. Primary air homogenises the polymer mass in the reactor and secondary air stirs heavier fractions from below, emptying the residual smoke black from the reactor at the end of the reaction. The capacity of the reactor in the example on the figure is 1 t/h total material. It has two inlet pipe chunks, one receiving the intermediary product mixture arriving from the PVC reactor No 2 and the other is an opening for plastic waste which definitely does not contain any halogens. This feeder opening can be used to receive compounds from a parallel built and coincidentally operated dehalogenisation reactor. The reactor in this case has 4 m³ internal volume requirements (live capacity or working volume). The end product of the destruction process are hydrocarbon gas and vapour compounds separated in the condensation systems Nos 10, 11 and 12 on one hand and the smoke black left in the main reactor No 5 on the other, which is removed from the reactor using secondary air. It is transported by the smoke black conveyor to an outside storage container.

Following the main reactor No 5 a fractionated condensation system consisting of serially connected condensers is installed (10, 11, 12), where the vapour and gas mixture exiting the reactor is separated by boiling points.

The construction constituting the serially connected condensers is used to solve the problem of condensation of hydrocarbon vapours liberated in the course of the destruction process. Precipitation is coupled with a kind of separating operation, and as a result various quality oil derivatives are obtained on the condenser units, collected naturally in a separated manner into the heavy oil tank No 13, heating oil tank No 14, Diesel oil tank No 15 and petrol tank No 16.

Cooling requirements on each of the columns vary as a function of the product mixture composition changing continuously in the course of the process. These needs can be met exclusively by controlling the temperature and flow rate of the cooling water as the surface is stable and the volume rate of flow in the product mixtures can not be influenced. The distillation columns are connected serially into the cooling loop. The vapour phase leaving the reactor flows directly onto the bottom of the heavy oil distillation column No 10 containing merely two cooling units. It leaves the column on the top, then enters the Diesel oil column on the bottom. Finally gas is drained from the top of the petrol column and this product is compressed to be stored in gas storage tank No 18, to be used to cover the energy requirements of the entire process. The coolest water arriving from the water tank No 17 cools the gas-vapour phase mixture first as it enters the petrol column, and the most intensively warmed cooling medium at the and of the process distracts condensation heat from the heavy oil fraction.

### Description of the destructive processes - An example

The installation is used to process 1 tonne of ground plastic waste. The thermal degradation process of cracking was completed with pure plastic waste as well. Particulars of the processes are seen on the Table below.

| Material | Operating temperature [°C] | Gas produced [W%] | Oil produced [W%] | Smoke black produced [W%] | Comment |
|---|---|---|---|---|---|
| Mixed PVC | 250; 450 | 6 | 48.5 | 11.5 | Significant HCl content (PVC) |
| ABS-PS | 420 | 11 | 80 | 9 | Significant aromatic content |
| PE | 480 | 7 | 75 | 18 | 40% olefin*, 60% paraffin* |
| pp | 450 | 6.5 | 85 | 8.5 | 40% olefin*, 60% paraffin* |

| | | | | | |
|---|---|---|---|---|---|
| *olefin = unsaturated hydrocarbons; paraffin = saturated hydrocarbons | | | | | |

One tonne of ground PVC waste and 400 litres of previously obtained heavy oil fraction is added to the PVC reactor. During stirring the operating temperature of the reactor is raised to 250°C by steadily increasing the heating output. Intensive gas formation is controlled by solenoid valves, and the gas flow is led into an aqueous countercurrent twin absorber, absorbed and the hydrochloric acid solution thus formed is used as industrial scale starting material. Dehalogenated polymer melt is fed onto the main reactor after the 1 hour of retention time has passed. The compound is kept at a temperature of 450°C for an hour while the various hydrocarbon fractions are separately condensed from the intensively produced vapour phase using a serially connected condensation system. At the end of the cracking process the residual smoke black is removed from the reactor using the secondary stirring air of the main reactor.

One tonne PVC waste provides 485 kg oil derivates, 115 kg finely distributed smoke black with 97 % carbon content, 60 kg hydrocarbon gas mixture - used to meet the heat requirements of the system itself, - and 340 kg HCI gas, the latter stored as 20 % hydrochloric solution. The system is continuously operated, as the flue gas from the main reactor is used to heat the PVC reactor, in other words the two reactors operate and serve each other simultaneously.

## Claims

1. Technological process concerning thermal degradation of plastic wastes containing PVC and other plastic waste with halogen content, **characterised by** grinding of the plastic waste to be treated, leading it into a dehalogenisation reactor with heavy oil fraction added forming a 1:0.3-0.8 mass ratio plastic grinding: heavy oil mixture, warming the reaction compound up to a temperature of 210-250°C, an acidic solution is formed from the hydrogen halogen gas liberated from the substance with the known method, it is removed, while the mixture retained in the reactor chamber is forwarded to the de-polymerisation reactor, where temperature is raised to at least 480°C, but kept below 600°C, the hydrocarbon gas mixture generated is extracted, separated into fractions, condensed, and the ratio of the heavy oil fraction referred to above as necessary for the processing of the waste is returned to the de-halogenisation reactor to form a mixture of plastic chippings and heavy oil.

2. The process according to claim 1 **characterised by** that the mass ratio of plastic waste grinding and heavy oil should be 1:0.4.

3. The process according to claims 1 and 2 **characterised by** that the vapour and gas mixture discharged from the reactor space is separated in a fractional condensation system consisting of serially connected condensers after the de-polymerisation system based on the boiling point of the respective constituents.

4. The process according to any of claims 1 - 3 **characterised by** that the heat requirements of the dehaloganisation process is met by the flue gases originating from the combustion chamber of the depolymerisation reactor.

## Patentansprüche

1. Technisches Verfahren bezüglich des thermischen Abbaus von Kunststoffabfallmaterialien, die PVC und anderes Kunststoffabfallmaterial mit einem Halogengehalt enthalten, **gekennzeichnet durch** Mahlen des zu behandelnden Kunststoffabfallmaterials, Führen desselben in einen Dehalogenierungsreaktor, wobei eine zugegebene Schwcrölfraktion ein Massenverhältnis von gemahlenem Kunststoff : Schwerölmischung von 1 : 0,3-0,8 bildet, Erwärmen der Reaktionsverbindung auf eine Temperatur von 210 - 250 °C, wobei eine saure Lösung aus dem Wasserstoffhalogengas, das aus der Substanz **durch** das bekannte Verfahren freigesetzt wird, gebildet wird, sie entfernt wird, während die in der Reaktorkammer zurückgehaltene Mischung zum Depolymerisationsrcaktor geschickt wird, wo die Temperatur auf mindestens 480 °C erhöht, jedoch unter 600 °C gehalten wird, die erzeugte Kohlenwasserstoffgasmischung extrahiert, in Fraktionen geteilt, kondensiert wird und das Verhältnis der Schwerölfraktion, auf die oben als für das Verarbeiten des Abfallmaterials notwendig Bezug genommen wird, zum Dehalogenierungsreaktor rückgeführt wird, um eine Mischung von Kunststoffsplittern und Schweröl zu bilden.

2. Verfahren nach Anspruch 1, **dadurch gekennzeichnet, dass** das Massenverhältnis des gemahlenen Kunststoffabfallznaterials und Schweröls 1 : 0,4 sein sollte.

3. Verfahren nach den Ansprüchen 1 und 2, **dadurch gekennzeichnet, dass** die Mischung von Dampf und Gas, die aus dem Reaktorraum abgelassen wird, in einem fraktionierten Kondensationssystem, das aus hintereinandergeschalteten Kondensatoren nach dem Depolymerisationssystem besteht, auf der Basis des Siedepunkts der jeweiligen Bestandteile aufgetrennt wird.

4. Verfahren nach einem der Ansprüche 1 - 3, **dadurch gekennzeichnet, dass** der Hitzebedarf des Dehalogenierungsvorgangs durch die Rauchgase erfüllt wird, die aus der Verbrennungskammer des Depolymerisationsreaktors stammen.

## Revendications

1. Procédé technologique relatif à la dégradation thermique de déchets plastiques contenant du PVC et d'autres déchets plastiques halogènés, **caractérisé par** le broyage des déchets plastiques à traiter, leur envoi dans un réacteur de déshalogénisation avec addition d'une fraction d'huile lourde dans un rapport pondéral du mélange «plastique broyé/huile lourde» de 1/0.3-0.8, le chauffage du composé de la réaction jusqu'à une température de 210-250°C, la formation d'une solution acide due à l'action de l'acide halohydrique sous forme gazeuse libéré par la substance en utilisant la méthode connue, le retrait de la solution acide tandis que le mélange retenu dans la chambre du réacteur est envoyé dans le réacteur de dépolymérisation, la température y étant portée à au moins 480°C, mais maintenue en dessous de 600°C, l'extraction du mélange de gaz hydrocarbonés généré, sa séparation en fractions, sa condensation, et le retour au réacteur de déshalogénisation de la fraction d'huile lourde indiquée ci-dessus selon le rapport qui est nécessaire pour le traitement des déchets, pour former un mélange de copeaux plastiques et d'huile lourde.

2. Le procédé selon la revendication 1, **caractérisé par** le rapport de masse déchets plastiques broyés/huile lourde de 1/0.4.

3. Le procédé selon la revendication 1 et 2, **caractérisé en ce que** le mélange vapeur et gaz retiré du réacteur est séparé dans un système de condensation fractionnée formé de condenseurs connectés en série disposés en aval du système de dépolymérisation sur la base du point d'ébullition des constituants respectifs.

4. Le procédé selon une quelconque des revendications 1 à 3, **caractérisé en ce que** les exigences de température du procédé de déshalogénisation sont satisfaites par action des effluents gazeux provenant de la chambre de combustion du réacteur de dépolymérisation.
